# EUROPEAN PATENT SPECIFICATION

(11) **EP 2 677 887 B1**
(45) Date of publication and mention of the grant of the patent: **26.08.2015**
(21) Application number: 12707191.8
(22) Date of filing: 16.02.2012
(51) Int. Cl.: A23L 2/44

(54) **REDUCTION OF SORBIC ACID PRECIPITATION**
REDUKTION VON SORBINSÄUREFÄLLUNG
RÉDUCTION DE LA PRÉCIPITATION D'ACIDE SORBIQUE

(30) Priority: 24.02.2011 US 201113033758; 24.02.2011 US 201113033777; 24.02.2011 US 201113033973
(43) Date of publication of application: 01.01.2014
(73) Proprietor: PepsiCo, Inc., Purchase, New York 10577 (US)
(72) Inventor: TAN, Siow Ying, Thornwood, New York 10594 (US); GIVEN, Peter, Ridgefield, Connecticut 06877 (US); GADIRAJU, Rama, Port Chester, New York 10573 (US); CLARK, Cynthia, Yorktown Heights, New York 10598 (US); MULLEN, Jessica, New Milford, Connecticut 06776 (US); JOHNSON, Winsome, Ossining, New York 10562 (US); BRAND-LEVINE, Dalit, Pleasantville, New York 10570 (US)
(74) Representative: Duxbury, Stephen
(86) International application number: PCT/US2012/025338
(87) International publication number: WO 2012/154245

(56) References cited:
- WO-A1-97/21359
- DE-A1- 2 623 682
- US-A1- 2009 306 210
- DATABASE WPI Week 201063 Thomson Scientific, London, GB; AN 2010-L68981 XP002676321, & CN 101 810 361 A (UNIV JIANGNAN) 25 August 2010 (2010-08-25)
- anonymous: "Cottonseed oil", Wikipedia , 15 September 2014 (2014-09-15), Retrieved from the Internet: URL:http//en.wikipedia.org/wiki/Cottonseed _oil [retrieved on 2014-09-29]

## Description

### FIELD OF THE INVENTION

The invention relates to a method for incorporating sorbic acid into beverages and beverage syrup. In particular, the method relates to a method for incorporating sorbic acid into beverages and beverage syrup while minimizing the potential for sorbic acid precipitation,

### BACKGROUND OF THE INVENTION

Consumer demand for refreshing beverages has led to introduction of many types of beverages. Commercial distribution of beverages requires that the beverages, and syrup from which beverages are made, be protected from spoilage if not consumed or used upon manufacture.

Beverages can be maintained under conditions that significantly retard activity of microbial and other spoilage agents, such as bacteria, molds, and fungi. Such conditions often require, for example, refrigeration until the beverage or syrup is consumed. Maintenance of such conditions often is not possible or practical.

Another method of retarding microbial activity is to add preservatives to the beverage. Many preservatives are known. However, known preservatives typically have disadvantages that limit use in beverages. For example, preservatives may impart off taste to the beverage when used in a concentration sufficient to provide preservative effect. Preservatives also may adversely affect the appearance of the beverage.

Some preservatives precipitate or form crystals or a floc under conditions of manufacture or storage of a beverage or of a syrup from which a beverage is made. Some preservatives may cloud the beverage, which is unacceptable to the consumer if the beverage is expected to be clear. Such phenomena typically are unacceptable to consumers not only because of certain preconceptions relating to appearance, but also because consumers often equate cloud or particulate formation with spoilage of the beverage. Floc, crystals, or sediment or sediment-like deposits in a beverage bottle also are unacceptable to consumers because the solids typically taste bad and present an unpleasant mouthfeel (for example, a gritty or sandy mouthfeel).

Beverages often are made from concentrates that are diluted. Beverages then are provided immediately to a consumer, or are packaged for distribution and consumption. The concentrates, often called syrups, are conveniently shipped, and then used to make beverages in a one-step process. Thus, it is convenient to put all ingredients, including preservatives, into a syrup. However, because syrup is concentrated, it often is not possible to introduce compounds that have limited solubility without precipitation.

Thus, there exists a need for a preservative that does not form solids, such as floc, crystals, sediment or sediment-like deposits, or precipitates, in syrup. There also exists a need for a preservative that does not cloud an optically clear beverage. There also exists a need for a method of introducing such a preservative without inducing precipitation thereof.

WO97/21359 A1 discloses beverages having stable flavor/cloud emulsions in the presence of polyphosphate containing preservative systems by including gellan gum.

### BRIEF SUMMARY OF THE INVENTION

Embodiments of the invention are directed to methods for forming a stable beverage syrup preserved with sorbic acid, as described in independent claims 1, 7 and 11. The stable preserved syrup has a shelf life of at least three days, or at least one week, and up to twenty weeks, at room temperature.

Another embodiment of the invention is directed to a method for forming a stable beverage preserved with sorbic acid, as described in independent claim 15. The stable preserved beverage has a shelf life of at least four weeks or at least 20 weeks at a temperature between about 4.44°C and about 43.33°C, (40°F and about 110°F).

### DETAILED DESCRIPTION OF THE INVENTION

As used herein, "syrup" or "beverage syrup" is a beverage precursor to which a fluid, typically water, is added to form a ready-to-drink beverage, or a "beverage." Typically, the volumetric ratio of syrup to water is between 1:3 to 1:8, more typically between 1:4 and 1:5. The volumetric ratio of syrup to water also is expressed as a "throw." A 1:5 ratio, which is a ratio commonly used within the beverage industry, is known as a "1+5 throw."

As used herein, "beverage" refers to beverages such as soft drinks, fountain beverages, frozen ready-to-drink beverages, coffee beverages, tea beverages, sport drinks, and alcoholic products. The beverage may be carbonated or noncarbonated. In addition, in certain embodiments of the invention, "beverage" refers also to juice, dairy, and other non-clear beverages. Beverages according to embodiments of the invention can be clear or non-clear.

"Clear" refers to optical clarity, i.e., a clear beverage can be as clear as water. In a preferred embodiment of the present invention, the beverage concentrate and/or the finished beverage are clear as evidenced by a reading by a HACH Turbidimeter (Model 2100AN, Hach Company, Loveland, Colo. ). Readings of up to 3 NTU (Nephelometric Turbidity Units) are considered very clear, and values up to 5 NTU can be considered clear. When such a reading is as high as around 6 to 10 NTU, a sample is not clear, but rather very slightly hazy or slightly hazy. At 15 NTU, a beverage is hazy. Thus, a beverage having turbidity not greater than 5 NTU is said to be a clear beverage, with values of 6 NTU being very slightly hazy to slightly hazy at 10 NTU.

As used herein, "stable" beverage syrup refers to syrup in which no phase separation occurs, i.e., no crystal, floc, sediment, haze, cloud, or precipitation at room temperature over a period of more than three days, typically more than one week, more typically more than four weeks, more typically more than ten weeks, and most typically more than twenty weeks. As used herein, a "stable" finished beverage refers to a clear beverage in which no phase separation occurs, i.e., no crystal, floc, sediment, haze, cloud, or precipitation at room temperature at 4.44°C, 21.11 °C, 32,22°C, and 43.33°C (40°F, 70°F, 90°F, and 110°F) over a period of four weeks, typically more than ten weeks, more typically for a period of more than twenty weeks, and more typically more than six months, i.e., within the typical shelf-life of the finished beverage.

A "preserved" beverage shows no significant microbiological activity during the period of stability.

As typically used herein, "water" is water, typically conditioned and treated, of a quality suitable for manufacturing beverages. Excessive hardness may induce precipitation of sorbic acid. With the guidance provided herein, the skilled practitioner will be able to provide water of sufficient quality.

"Fluid" means water and juice, dairy, or other liquid beverage products that form part of beverages. For example, dairy components may be added in quantity that does not provide sufficient hardness to induce sorbic acid precipitation. With the guidance provided herein, the skilled practitioner can determine whether addition of dairy, juice or other liquid beverage product is suitable for use in embodiments of the invention.

For brevity, the invention will be described as it relates to water as the fluid. However, the description herein also relates to fluid, as defined herein. With the guidance provided herein, the skilled practitioner will be able to provide fluids suitable for use in forming syrup.

Beverages and syrups made in accordance with embodiments of the invention typically comprise water, preservative (including sorbic acid), sweetener, pH-neutral compounds, acids and acidic compounds, and flavors and flavor compounds. These compounds typically include taste modifiers, nutrients, colors, and other compounds, such as emulsions, surfactants, buffers, and anti-foaming compounds, typically found in beverages.

Sorbic acid and sorbates act as preservatives. However, at the pH levels typically found in syrups, and at a typical sorbic acid and/or sorbate concentrations in syrup sufficient to provide commercially useful preservative activity in beverages made therefrom, sorbic acid is likely to precipitate unless steps are taken to avoid precipitation.

### Microemulsion of Sorbic Acid

The inventors have discovered that precipitation of sorbic acid in syrup during manufacture of the syrup and the beverage can be avoided by forming in aqueous solution a microemulsion of sorbic acid in non-aqueous solvent with surfactant. This microemulsion then is added to the syrup or beverage. Although the inventors do not wish to be bound by theory, it is believed that the surfactant ameliorates local conditions, such as a locally low pH, that induce sorbic acid precipitation, and aids in solubilizing any sorbic acid that does precipitate.

A microemulsion is a thermodynamically stable, transparent, low viscosity, isotropic dispersion comprising oil and water stabilized by a surfactant. A second surfactant, or co-surfactant, may be used. Microemulsions typically have particle sizes ranging from 5 nm to 100 nm. Although the inventors do not wish to be bound by theory, it is believed that microemulsions arise from a spontaneous self-assembly of the hydrophobic and hydrophilic parts of surfactant molecules with the included compound (sorbic acid) and the non-aqueous phase. Microemulsions also can exist in the presence of excess water phase. The inventors have discovered that, even with a great excess of water phase, as would be found in a beverage, the surfactant still has the ability to maintain the solubility of the sorbic acid, even though the microemulsion no longer exists.

Microemulsions can be prepared by low-energy emulsification in the following three ways: dilution of an oil-surfactant mixture with an aqueous phase; dilution of an aqueous-surfactant mixture with an oil phase; and mixing all components together. A microemulsion also can be made by phase inversion, especially when the surfactant is an ethoxylated non-ionic surfactant. When an oil-in-water emulsion containing such a surfactant is heated, the emulsion inverts to a water-in-oil emulsion at the critical (phase inversion) temperature. Cooling with agitation yields a stable oil-in-water microemulsion. However, during phase inversion, droplet size reaches a maximum. Because larger droplets are more likely to cloud or haze a liquid product, the skilled practitioner recognizes that the phase inversion method typically would not be used to make a microemulsion in embodiments of the invention.

A non-aqueous solvent typically is used to solubilize sorbic acid as well as the surfactant. Suitable non-aqueous solvents include, without limitation, propylene glycol, ethanol, citric acid, benzyl alcohol, triacetin, limonene, vegetable oils, medium chain triglycerides, citrus flavor oils, and combinations thereof.

In an additional and optional step, a co-solvent is added to the beverage concentrate in embodiments of the invention. Such an addition is necessary when, for example, a non-aqueous solvent is employed and neither the non-aqueous solvent nor the surfactant is miscible with water. In such a situation, it is necessary to add a co-solvent that is miscible not only with water, but also with non-aqueous solvent and the surfactant. Further, addition of a co-solvent facilitates later dilution of the beverage concentrate regardless of the water miscibility of the non-aqueous solvent and the surfactant.

If a co-solvent is employed, it typically is added after the addition of surfactant. Suitable co-solvents include, without limitation, propylene glycol, ethanol, citric acid, benzyl alcohol, triacetin, limonene, and combinations thereof. In particularly preferred embodiments of the present invention, a combination of propylene glycol and ethanol, typically a 60:40 combination, or a combination of ethanol and citric acid, typically a 90:10 combination, is used. The co-solvent may be the same solvent or solvents used to make the non-aqueous solution containing sorbic acid. Alternatively, the co-solvent may be different. With the guidance provided herein, the skilled practitioner can readily determine the amount. Simply put, the amount must be sufficient to act as a "bridge" between water and the mixture of non-aqueous solvent plus surfactant, and typically ranges from 15 percent to 70 percent, more typically from 20 percent to 50 percent, by total weight of the sorbic acid pre-microemulsion mixture.

Polysorbate typically is used as the surfactant in embodiments of the invention. Polysorbate is a commonly known non-ionic surfactant often used in foods. Polysorbate is derived from polyethoxylated sorbitan and a fatty acid, as set forth in the following table. Polysorbate is commonly available in six grades as polysorbate 20, 40, 60, 65, 80, and 85, commercially available from suppliers. These products also are available from ICI Americas as Tween 20, 40, 60, 65, 80, and 85. The chemical formulas and HLB values of these compounds are as follows:

| Name | Formula | HLB |
|---|---|---|
| Polysorbate 20 | Polyoxyethylene (20) sorbitan monolaurate | 16.7 |
| Polysorbate 40 | Polyoxyethylene (20) sorbitan palmitate | 15.6 |
| Polysorbate 60 | Polyoxyethylene (20) sorbitan stearate | 14.9 |
| Polysorbate 65 | Polyoxyethylene (20) sorbitan tri-stearate | 10.5 |
| Polysorbate 80 | Polyoxyethylene (20) sorbitan oleate | 15.0 |
| Polysorbate 85 | Polyoxyethylene (20) sorbitan trioleate | 11.0 |

Some polysorbates are reasonably soluble in water, and so can conveniently be dissolved in aqueous solutions. However, more typically, polysorbate is added to the non-aqueous phase first, thus forming a pre-microemulsion.

As the skilled practitioner recognizes, water-in-oil microemulsions typically form at HLBs between 3 and approximately 8, and oil-in-water microemulsions typically form at HLBs between approximately 8 and 18. HLB's above approximately 8 indicate that the molecule has greater hydrophilic character. The polysorbates typically used in embodiments of the invention have HLB values greater than 10, and so typically form oil-in-water microemulsions.

Polysorbate typically is used as the surfactant to form a microemulsion in accordance with embodiments of the invention. Polysorbate is food-safe and well-accepted in liquids. However, other food-safe surfactants also can be used. Other suitable surfactants include, but are not limited to, sorbitan monolaurate (Span 20), sorbitan monopalmitate (Span 40), sorbitan monostearate (Span 60), sorbitan monooleate (Span 80), sucrose monomyristate, sucrose monopalmitate, sucrose palmitate/stearate, sucrose stearate, vitamin E TPGS (tocopherol propylene glycol succinate, a water-soluble form of vitamin E), dioctylsulfosuccinate sodium salt (DOSS), monoglyceride monooleate, monoglyceride monolaurate, monoglyceride monopalmitate, lecithin, diglyceride mixtures, citric acid esters of monoglycerides, acetic acid esters of monoglycerides, lactic acid esters of monoglycerides, diacetyl tartaric esters of monoglycerides, polyglycerol esters of fatty acids such as decaglycerol monocaprylate/caprate, triglycerol monooleate, decaglycerol monostearate, decaglycerol dipalmitate, decaglycerol monooleate, decaglycerol tetraoleate and hexaglycerol dioleate, α-, β-, and γ-cyclodextrins, propylene glycol esters of fatty acids such as dicaprate esters, mono and dicaprylate ester blends and diesters of caprylate and capric acids, stearoyl lactylates, free fatty acids (typically C₈₋₁₈), and combinations thereof.

Although it is preferable to incorporate surfactants having an HLB value at least approximately 8 for oil-in-water microemulsion formation, often surfactants with HLB values less than approximately 8 are used in blends with those surfactants having higher HLB values. This technique results in enhanced performance.

As used herein, "micelle" refers to a system in which a surfactant aggregates at the molecular level. The size of a micelle is approximately around 5 to 10 nm. There is a critical minimum concentration (CMC) for a surfactant associated with micelle formation. Below the CMC, a surfactant is merely in solution; above the CMC, discrete particles or micelles spontaneously form. Thus, in embodiments of the invention, a pre-microemulsion is made. However, the pre-microemulsion reverts to a microemulsion when introduced to the syrup or beverage.

Micelles deliver sorbic acid by intercalation of the sorbic acid with the hydrophobic portion of the micelle. To act as a delivery system, it is generally required to have a molecular excess of surfactant over water-immiscible component.

To form a microemulsion and to prevent the aggregation of the oil phase, the amount of emulsifier or surfactant should exceed the critical micelle concentration and desirably is at least about one to about ten times the amount of the dispersed component composed of non-aqueous solvent plus sorbic acid. The size of droplets in a microemulsion is 5 to 100 nm, smaller than the wavelength of visible light (about 100 nm). Therefore, a microemulsion is clear. A microemulsion is also thermodynamically stable; forms spontaneously, i.e., the mixing sequence does not matter; and has a reversible phase change, i.e., if phase separation occurs at an elevated temperature, uniform appearance returns upon temperature decrease, although the particle size likely will have increased. In any event, if the particle size significantly exceeds 100 nm diameter, the appearance of the beverage will become hazy or cloudy.

A microemulsion requires that the amount of a surfactant be beyond its CMC to form an emulsion. In aqueous medium, the CMC of Tween 20 is about 0.07 percent (about 700 ppm); for Tween 60, the CMC is about 0.03 percent (about 300 ppm); and for Tween 80, the CMC is about 0.015 percent (about 150 ppm). However, the concentration of surfactant in a finished beverage typically is about 5 ppm to about 15 ppm. Hence, the concentration of surfactant in beverage embodiments of the invention is at least one order of magnitude below a corresponding CMC. However, micelles formed upon initial contact between the sorbic acid pre-microemulsion and water seem to persist in syrup and beverage as the appearance of both remains optically transparent and no sorbic acid precipitation forms over time. Although the inventors do not wish to be bound by theory, this phenomenon can be partially explained by the fact that some of the sorbic acid initially introduced to the syrup is water-soluble and may partition out of the micelle structure into the bulk water phase. Thus, the surfactant micelles are required to disperse only sorbic acid that is not water soluble, and that remains within the micelles (at equilibrium).

Microemulsions also require that the amount of surfactant be several times that of the dispersed substance (sorbic acid, typically in non-aqueous solvent), thereby enabling the surfactant to form droplets that "wrap" around the dispersed substance. However, the concentration of sorbic acid is 1200 to 1600 ppm in syrup and 250 to 350 ppm in beverages, while, as noted above, the concentration of a surfactant such as Tween is approximately 30 ppm to 90 ppm in syrup and 5 ppm to 15 ppm in a beverage. Thus, the formation of droplets to wrap around the dispersed sorbic acid is impossible in a large excess of water. Sorbic acid has a lower molecular weight than the surfactants used in the present invention. Therefore, on a molar basis, the concentration difference between the surfactants and the sorbic acid in the concentrate/syrup/beverage is even greater. Although the inventors do not wish to be bound by theory, it is believed that, for all these reasons, the microemulsion does not persist in a syrup or in a beverage.

The microemulsion typically is formed by mixing the components with sufficient agitation for a time sufficient to form the microemulsion. As the microemulsion is self-forming, agitation typically need not be very vigorous. The microemulsion typically is formed in fluid at a temperature of between 4.44°C (40°F) and less than about the phase invention temperature of the system. More typically, the microemulsion is formed at a temperature between 10°C and 54.44°C (50°F and 130°F).

The quantity of polysorbate introduced into a syrup from the microemulsion in embodiments of the invention is sufficient to achieve a concentration of polysorbate in the syrup of at least 0.5 ppm, typically at least 1 ppm, more typically at least 2 ppm, and even more typically at least 5 ppm. The maximum concentration of polysorbate typically effective in embodiments of the invention is less than 200 ppm, more typically less than 150 ppm, and more typically less than 100 ppm. Therefore, typical ranges of polysorbate concentrations are between 0.5 and 200 ppm, typically between 1 and 100 ppm, and more typically between 5 and 100 ppm. Typically, the amount of polysorbate in syrup and beverage is minimized because polysorbate also is a foaming agent, which may lead to foam generation, particularly during carbonation. Potential adverse impact on taste by a large concentration of polysorbate also must be considered. Regulations also may limit polysorbate use in some markets.

In accordance with embodiments of the invention, sorbic acid is dissolved in surfactant, or typically into non-aqueous solvent. The skilled practitioner recognizes that sorbic acid is sparingly soluble in water. Thus, typically, sorbic acid is dissolved in a solvent that then is blended with surfactant and optionally a co-solvent to form a pre-microemulsion, which then is introduced into the syrup or beverage.

### Sorbic Acid Compound in Oil-based Ingredient

The inventors have also discovered that precipitation of sorbic acid in syrup during manufacture of the syrup and the beverage can be avoided by dissolving a sorbic-acid compound in an oil-based ingredient, which then is added to the syrup.

As used herein, a sorbic acid compound is a compound or composition that contains sorbic acid or is converted to or liberates sorbic acid under conditions found during syrup and beverage manufacture. In particular, sorbic acid typically is introduced as a sorbate, typically as an alkali metal salt of sorbic acid. Typically-used alkali metals are sodium and potassium. In a more typical embodiment of the invention, potassium sorbate is used. Although the inventors do not wish to be bound by theory, it is believed that the oil-based ingredient ameliorates local conditions, such as a locally low pH, that induce sorbic acid precipitation.

Some of the ingredients of beverages and syrups are oil-based or include an oil-based ingredient. For example, some nutrients, such as tocopherols (Vitamin E) and tocotrienols, are oil-based ingredients. Also, many flavors and flavor compounds are oil-based or include an oil-based ingredient. As the skilled practitioner recognizes, citrus flavors, such as lemon, lime, lemon/lime, orange, grapefruit, and the like, often have an oil-based ingredient.

Other ingredients that may have an oil-based ingredient include antioxidants, such as TBHQ, BHA, and BHT. With the guidance provided herein, the skilled practitioner will be able to identify a suitable oil-based ingredient into which the sorbic acid component is suitably dissolved.

The concentration of sorbic acid in the beverage typically is less than 500 ppm. The concentration of sorbic acid in the syrup typically is less than 1300 ppm. In aqueous solution at pH of between 2.5 and 4 at about 20°C, which are typical manufacturing conditions for beverages and syrups, sorbic acid precipitation begins at sorbate concentration of about 500 ppm, unless steps are taken to preclude precipitation, and at 1300 ppm, the tendency to precipitate is clear. Further, as the skilled practitioner recognizes, other compounds in the beverage or syrup may also affect sorbic acid solubility adversely. For example, hardness lowers the solubility of sorbic acid. Therefore, addition of sorbate in accordance with embodiments of the invention is contemplated at a wide range of sorbic acid concentrations while essentially precluding sorbic acid precipitation.

### Sorbic Acid Compound and Polysorbate in an Aqueous Fluid

The inventors have further discovered that precipitation of sorbic acid in syrup during manufacture of the syrup and the beverage can be avoided by dissolving both a sorbic acid compound and polysorbate in aqueous fluid, which then is added to the syrup.

As used herein, a sorbic acid compound is a compound or composition that contains sorbic acid or is converted to or liberates sorbic acid under conditions found during syrup and beverage manufacture. In particular, sorbic acid typically is introduced as a sorbate, typically as an alkali metal salt of sorbic acid. Typically-used alkali metals are sodium and potassium. In a more typical embodiment of the invention, potassium sorbate is used. Although the inventors do not wish to be bound by theory, it is believed that the polysorbate ameliorates local conditions, such as a locally low pH, that induce sorbic acid precipitation, and aids in solubilizing the sorbic acid when it forms.

In accordance with embodiments of the invention, both a sorbic acid compound and polysorbate are dissolved in syrup. The skilled practitioner recognizes that sorbic acid is soluble in water, and that the sorbates are significantly more soluble and therefore typically are used as sorbic acid compounds in embodiments of the invention. Thus, an aqueous solution of sorbic acid compound or compounds and polysorbate is used in embodiments of the invention. Other syrup ingredients also can be added as part of this solution.

The concentration of sorbic acid in the beverage typically is less than 500 ppm. The concentration of sorbic acid in the syrup typically is less than 1300 ppm. In aqueous solution at pH of between about 2.5 and about 4 at about 20°C, which are typical manufacturing conditions for beverages and syrups, sorbic acid precipitation begins at sorbate concentration of about 500 ppm, unless steps are taken to preclude precipitation, and at 1300 ppm, the tendency to precipitate is clear. Further, as the skilled practitioner recognizes, other compounds in the beverage or syrup may also affect sorbic acid solubility adversely. For example, hardness lowers the solubility of sorbic acid. Therefore, addition of sorbate in accordance with embodiments of the invention is contemplated at a wide range of sorbic acid concentrations while essentially precluding sorbic acid precipitation.

As discussed above, polysorbate is a commonly known non-ionic surfactant and emulsifier often used in foods. Polysorbate is derived from polyethoxylated sorbitan and oleic acid and is commonly available in grades such as polysorbate 20, 40, 60, and 80, commercially available from suppliers. Polysorbates are reasonably soluble in water, and so can conveniently be dissolved in aqueous solutions.

The quantity of polysorbate introduced into a syrup in embodiments of the invention is sufficient to achieve a concentration of polysorbate in the syrup of at least 0.5 ppm, typically at least 1 ppm, more typically at least 2 ppm, and even more typically at least 5 ppm. The maximum concentration of polysorbate typically effective in embodiments of the invention is less than 200 ppm, more typically less than 150 ppm, and more typically less than 100 ppm. Therefore, typical ranges of polysorbate concentrations are between 0.5 and 200 ppm, typically between 1 and 150 ppm, and more typically between 5 and 100 ppm.

The concentration of sorbic acid in a beverage typically is less than 500 ppm. The concentration of sorbic acid in syrup typically is less than 1300 ppm. In aqueous solution at pH of between 2.5 and 4 at about 20°C, which are typical manufacturing conditions for beverages and syrups, sorbic acid precipitation begins at sorbic acid concentration of about 500 ppm, unless steps are taken to preclude precipitation, and at 1300 ppm, the tendency to precipitate is magnified. Further, as the skilled practitioner recognizes, other compounds in the beverage or syrup may also affect sorbic acid solubility adversely. For example, hardness lowers the solubility of sorbic acid. Therefore, addition of sorbic acid in a microemulsion in accordance with embodiments of the invention is contemplated at a wide range of sorbic acid concentrations while essentially precluding sorbic acid precipitation.

### Further Aspects

The concentration of sorbic acid required to achieve commercial preservation conditions also relates to other conditions of the syrup or beverage. For example, carbonation will decrease the concentration of sorbic acid required to achieve a given preservation performance. In contradistinction, lowering the pH lowers the concentration of sorbic acid required to achieve a given preservation performance. With the guidance provided herein, the skilled practitioner will be able to establish a sorbic acid concentration that suitably preserves a syrup or beverage.

In accordance with embodiments of the invention, syrup and beverages include sorbic acid as preservative. Other preservatives are known to the skilled practitioner, and may be included with the sorbic acid. Other preservatives include, for example, chelators such as the EDTA's, including disodium EDTA, calcium disodium EDTA, and sodium hexametaphosphate (SHMP), and antimicrobials such as benzoates, particularly the alkali metal benzoates; lauric arginate; salts of cinnamic acid; and antioxidants, including tocopherols, BHA, and BHT. In accordance with embodiments of the invention, other preservatives are used sparingly, and most typically not at all. With the guidance provided herein, the skilled practitioner will be able to select appropriate preservatives.

Sweeteners of beverage and syrup embodiments of the invention include caloric carbohydrate sweeteners, natural high-potency sweeteners, synthetic high-potency sweeteners, other sweeteners, and combinations thereof. With the guidance provided herein, a suitable sweetening system (whether a single compound or combination thereof) can be selected.

Examples of suitable caloric carbohydrate sweeteners include sucrose, fructose, glucose, erythritol, maltitol, lactitol, sorbitol, mannitol, xylitol, D-tagatose, trehalose, galactose, rhamnose, cyclodextrin (e.g., α-cyclodextrin, β-cyclodextrin, and γ-cyclodextrin), ribulose, threose, arabinose, xylose, lyxose, allose, altrose, mannose, idose, lactose, maltose, invert sugar, isotrehalose, neotrehalose, palatinose or isomaltulose, erythrose, deoxyribose, gulose, idose, talose, erythrulose, xylulose, psicose, turanose, cellobiose, glucosamine, mannosamine, fucose, glucuronic acid, gluconic acid, glucono-lactone, abequose, galactosamine, xylo-oligosaccharides (xylotriose, xylobiose and the like), gentio-oligoscaccharides (gentiobiose, gentiotriose, gentiotetraose and the like), galacto-oligosaccharides, sorbose, nigero-oligosaccharides, fructooligosaccharides (kestose, nystose and the like), maltotetraol, maltotriol, malto-oligosaccharides (maltotriose, maltotetraose, maltopentaose, maltohexaose, maltoheptaose and the like), lactulose, melibiose, raffinose, rhamnose, ribose, isomerized liquid sugars such as high fructose corn/starch syrup (e.g., HFCS55, HFCS42, or HFCS90), coupling sugars, soybean oligosaccharides, and glucose syrup.

Other sweeteners suitable for use in embodiments provided herein include natural, synthetic, and other high-potency sweeteners. As used herein, the phrases "natural high-potency sweetener," "NHPS," "NHPS composition," and "natural high-potency sweetener composition" are synonymous. "NHPS" means any sweetener found in nature which may be in raw, extracted, purified, treated enzymatically, or any other form, singularly or in combination thereof and characteristically has a sweetness potency greater than sucrose, fructose, or glucose, yet has fewer calories. Non-limiting examples of NHPS's suitable for embodiments of this invention include rebaudioside A, rebaudioside B, rebaudioside C (dulcoside B), rebaudioside D, rebaudioside E, rebaudioside F, dulcoside A, rubusoside, stevia, stevioside, mogroside IV, mogroside V, Luo Han Guo sweetener, siamenoside, monatin and its salts (monatin SS, RR, RS, SR), curculin, glycyrrhizic acid and its salts, thaumatin, monellin, mabinlin, brazzein, hernandulcin, phyllodulcin, glycyphyllin, phloridzin, trilobtain, baiyunoside, osladin, polypodoside A, pterocaryoside A, pterocaryoside B, mukurozioside, phlomisoside I, periandrin I, abrusoside A, and cyclocarioside I**.**

NHPS also includes modified NHPS's. Modified NHPS's include NHPS's which have been altered naturally. For example, a modified NHPS includes, but is not limited to, NHPS's which have been fermented, contacted with enzyme, or derivatized or substituted on the NHPS. In one embodiment, at least one modified NHPS may be used in combination with at least one NHPS. In another embodiment, at least one modified NHPS may be used without a NHPS. Thus, modified NHPS's may be substituted for a NHPS or may be used in combination with NHPS's for any of the embodiments described herein. For the sake of brevity, however, in the description of embodiments of this invention, a modified NHPS is not expressly described as an alternative to an unmodified NHPS, but it should be understood that modified NHPS's can be substituted for NHPS's in any embodiment disclosed herein.

As used herein, the phrase "synthetic sweetener" refers to any composition that is not found in nature and is a high potency sweetener. Non-limiting examples of synthetic sweeteners, which also are known as 'artificial sweeteners,' suitable for embodiments of this invention include sucralose, acesulfame potassium (acesulfame K or aceK) or other salts, aspartame, alitame, saccharin, neohesperidin dihydrochalcone, cyclamate, neotame, N-[3-(3-hydroxy-4-methoxyphenyl)propyl]-L-α-aspartyl]-L-phenylalanine 1-methyl ester, N-[3-(3-hydroxy-4-methoxyphenyl)-3-methylbutyl]-L-α-aspartyl]-L-phenylalanine 1-methyl ester, N-[3-(3-methoxy-4-hydroxyphenyl)propyl]-L-α-aspartyl]-L-phenylalanine 1-methyl ester, and salts thereof.

Acids suitably used in embodiments of the invention include food grade acids typically used in beverages and beverage syrups. Buffers include salts of food grade acids that form pH buffers, i.e., provide a combination of compounds that tends to maintain the pH at a selected level. Food acids for use in particular embodiments include, but are not limited to, phosphoric acid, citric acid, ascorbic acid, adipic acid, fumaric acid, lactic acid, malic acid, tartaric acid, acetic acid, oxalic acid, tannic acid, caffeotannic acid, and combinations thereof

Flavors routinely used in beverages and syrups are suitably used in beverages and syrups that are embodiment of the invention. The skilled practitioner recognizes that some flavors will haze or add a cloudy appearance to a beverage. Therefore, such a flavor, which often may be an emulsion, would not be suitably used in a clear beverage. Suitable flavors include flavors typically used in beverages and syrup that are not incompatible with the type of beverage. That is, a clear beverage would not typically be flavored with a flavor that would cloud the beverage, introduce haze, or otherwise make the beverage less attractive to the consumer. However, subject to this condition known to the skilled practitioner, known flavors suitably are used, as appropriate.

Any flavor, flavor compound, or flavor system consistent with the type of beverage suitably is used in embodiments of the invention. Further, the flavor may be in any form, such as powder, emulsion, micro-emulsion, and the like. Some of these forms may induce clouding in a beverage, and so would not be used in a clear beverage. Typical flavors include almond, amaretto, apple, sour apple, apricot, nectarine, banana, black cherry, cherry, raspberry, black raspberry, blueberry, chocolate, cinnamon, coconut, coffee, cola, cranberry, cream, irish cream, fruit punch, ginger, grand marnier, grape, grapefruit, guava, grenadine, pomegranate, hazelnut, kiwi, lemon, lime, lemon/lime, tangerine, mandarin, mango, mocha, orange, papaya, passion fruit, peach, pear, peppermint, spearmint, pina colada, pineapple, root beer, birch beer, sarsaparilla, strawberry, boysenberry, tea, tonic, watermelon, melon, wild cherry, and vanilla. Exemplary flavors are lemon-lime, cola, coffee, tea, fruit flavors of all types, and combinations thereof.

Surfactants other than polysorbate also may be present in the syrup or beverage may be added as an ingredient of the syrup. The skilled practitioner recognizes that surfactant also may be introduced into the syrup or beverage as part of a component ingredient. Surfactants typically suitable for use in embodiments of this invention include, but are not limited to, sodium dodecylbenzenesulfonate, dioctyl sulfosuccinate or dioctyl sulfosuccinate sodium, sodium dodecyl sulfate, cetylpyridinium chloride (hexadecylpyridinium chloride), hexadecyltrimethylammonium bromide, sodium cholate, carbamoyl, choline chloride, sodium glycocholate, sodium taurodeoxycholate, lauric arginate, sodium stearoyl lactylate, sodium taurocholate, lecithins, sucrose oleate esters, sucrose stearate esters, sucrose palmitate esters, sucrose laurate esters, and other surfactants.

The skilled practitioner recognizes that ingredients can be added singularly or in combination. Also, solutions of dry ingredients can be made and used to conveniently add ingredients to the bulk quantity of water.

The skilled practitioner recognizes that, if a temperature higher than ambient temperature is used during syrup manufacture, the temperature of the syrup may be reduced after the product is complete, or, typically, after acidification and before volatile materials are added. Typically, beverage syrup is made by adding ingredients to a bulk quantity of water. The water typically is at a temperature of at least 10 °C, (50°F) and typically less than 93.33°C (200°F), commonly between 10 °C and 71.11°C (50°F and 160°F), and typically between 10°C and 54.44°C (50°F and 130°F).

With respect to the microemulsion, although beverage and syrup may be made at a temperature higher than the phase inversion temperature of the microemulsion described in embodiments of the invention herein, the microemulsion is not added until the temperature of the fluid to which the microemulsion is being added is below the phase inversion temperature. In this way, the droplets containing sorbic acid remain small and do not impart haze or cloudiness to syrup or a beverage. Typically, for a microemulsion made with polysorbate, the phase inversion temperature is less than 54.44°C (130°F). However, the skilled practitioner recognizes that the phase inversion temperature is related to not only the surfactant used to form the microemulsion but also the composition of the syrup or beverage. For example, a higher concentration of surfactants may raise the phase inversion temperature. The presence of oil-based flavor also may affect the phase inversion temperature of the sorbic acid microemulsion. With the guidance provided herein, the skilled practitioner will be able to determine the phase inversion temperature, above which the microemulsion typically is not added to the beverage.

Ingredients typically are added to the bulk quantity of water in an order that minimizes potential adverse interactions between ingredients or potential adverse effect on an ingredient. For example, nutrients that are temperature-sensitive might be added during a relatively low-temperature portion toward the end of the manufacturing process. Similarly, flavors and flavor compounds often are added just before completion of the syrup to minimize potential loss of volatile components and to minimize flavor loss in any form. Often, acidification is one of the last steps, typically carried out before temperature-sensitive, volatile, and flavor materials are added. Thus, flavors or flavor components or other volatile materials and nutrients typically are added at an appropriate time and at an appropriate temperature. With the guidance provided herein, the skilled practitioner can identify an appropriate time to introduce flavor and other volatile materials.

Any of these or other orders of ingredient addition are suitably used, as the order in which ingredients are added can be determined by the skilled practitioner with the guidance provided herein. Thus, the sorbic acid-containing microemulsion, the sorbic acid compound dissolved in an oil-based ingredient, or the sorbic acid compound dissolved together with polysorbate in aqueous solution can be added to the bulk solution at any time, subject to the temperature limitation already described.

The resulting syrup is packaged and may be stored. Syrup may be used essentially immediately to manufacture beverages, which typically are packaged for distribution. Syrup also may be distributed to bottlers, who package beverages made by addition of water and perhaps other materials like carbonation. Typically, the throw is 1+5. Also, syrup typically is sold to those who mix the syrup with throw water, and perhaps other ingredients, such as carbonation, for immediate consumption. One example of such a preparation is a 'fountain soft drink.'

Other embodiments of the invention are directed to manufacture of stable preserved ready-to-drink beverages. Such beverages are made by mixing an aliquot of syrup with an appropriate quantity of diluting water. Typically, the ratio of 1 volume of syrup with 5 volumes of water or other fluid, also known as a "1+5 throw", is used.

Syrup embodiments of the invention are stable beverage syrups preserved with sorbic acid having a shelf life of at least three days, or at least about one week at room temperature. More typically, syrup embodiments of the invention have a shelf life of at least 4 weeks, or at least seven weeks, and even more typically at least 20 weeks.

Beverage embodiments of the invention are stable beverages preserved with sorbic acid having a shelf life of at least four weeks, or at least ten weeks at a temperature between 4.44°C and 43.33°C (40°F and 110°F). More typically, beverage embodiments of the invention have a shelf life of at least four weeks, or at least six weeks, or at least twenty weeks, and even more typically at least six months.

The following examples illustrate, but do not limit, the invention.

### Example 1

Lemon lime flavored syrup, and beverage made therefrom using 1+5 throw, are made. A bulk quantity of water at a temperature between about 10°C and 93.33°C (50°F and 200°F) is charged to a stirred tank and agitation is started.

Ingredients such as buffers, sweeteners, anti-foam agents, and nutrients are added to the bulk quantity of water. The ingredients are added as solid, liquid, solution, emulsion, or in any form. Solids are dissolved in fluid to form a solution, suspension, or other aqueous combination. Acids then are added to the bulk solution with continuing agitation.

A microemulsion of sorbic acid and ethanol with polysorbate 20 surfactant is made in water. The quantity of sorbic acid added is sufficient to provide a sorbic acid concentration of 0.12 weight percent in the syrup. This microemulsion is added to the bulk solution with continuing agitation at a temperature below the phase inversion temperature of the microemulsion in the syrup.

The temperature of the bulk solution then is lowered to less than about 48.88°C (120°F), if necessary, and lemon lime flavor is added with continuing agitation. After thorough blending, additional top-off water required to achieve the desired volume is added and agitation continues until the syrup is thoroughly mixed. The syrup then is cooled to ambient temperature, if necessary.

Syrup thus prepared is a clear syrup for a fresh-tasting beverage. The syrup is stored at room temperature for 1 week. The syrup remains clear and without any solid precipitate, sediment, crystal, floc, cloud, or haze.

An aliquot of syrup thus prepared is diluted with 5 aliquots of throw water ("1+5 throw") to produce fresh-tasting lemon lime flavored clear beverage. The beverage is stored at room temperature for 10 weeks, and remains clear and without any solid precipitate, sediment, crystal, floc, cloud, or haze.

### Example 2

Lemon lime flavored syrup, and beverage made therefrom using 1+5 throw, are made in accordance with the method of Example 1, except that the microemulsion is made using propylene glycol and is added to the bulk quantity of water before the other ingredients are added.

Syrup thus prepared is a clear syrup for a fresh-tasting beverage. The syrup is stored at room temperature for 4 weeks. The syrup remains clear and without any solid precipitate, sediment, crystal, floc, cloud, or haze.

An aliquot of syrup thus prepared is diluted with 5 aliquots of throw water ("1+5 throw") to produce fresh-tasting lemon lime flavored clear beverage. The beverage is stored at room temperature for 6 months, and remains clear and without any solid precipitate, sediment, crystal, floc, cloud, or haze.

### Example 3

Lemon lime flavored syrup, and beverage made therefrom using 1+5 throw, are made in accordance with the method of Example 1, except that buffers are added to the microemulsion.

Syrup thus prepared is a clear syrup for a fresh-tasting beverage. The syrup is stored at room temperature for 4 weeks. The syrup remains clear and without any solid precipitate, sediment, crystal, floc, cloud, or haze.

An aliquot of syrup thus prepared is diluted with 5 aliquots of throw water ("1+5 throw") to produce fresh-tasting lemon lime flavored clear beverage. The beverage is stored at room temperature for 6 months, and remains clear and without any solid precipitate, sediment, crystal, floc, cloud, or haze.

### Example 4

Lemon lime flavored syrup, and beverages made therefrom using 1+5 throw, are made. A bulk quantity of water at a temperature between about 10°C and 93.33°C (50°F and 200°F) is charged to a stirred tank and agitation is started.

Ingredients such as buffers, sweeteners, anti-foam agents, and nutrients are added to the bulk quantity of water. The ingredients are added as solid, liquid, solution, emulsion, or in any form. Acids then are added to the bulk solution with continuing agitation.

Potassium sorbate is dissolved in the lemon lime flavor, which contains oil-based materials. The quantity of sorbate added is sufficient to provide a sorbate concentration of 0.12 weight percent in the syrup.

The temperature of the bulk solution is lowered to less than about 48.88°C (120°F), if necessary, and the lemon lime flavor containing potassium sorbate is added with continuing agitation. After thorough blending, additional top-off water required to achieve the desired volume is added and agitation continues until the syrup is thoroughly mixed. The syrup then is cooled to ambient temperature, if necessary.

Syrup thus prepared is a clear syrup for a fresh-tasting beverage. The syrup is stored at room temperature for 7 days. The syrup remains clear and without any solid precipitate, sediment, crystal, floc, cloud, or haze.

An aliquot of syrup thus prepared is diluted with 5 aliquots of throw water ("1+5 throw") to produce fresh-tasting lemon lime flavored clear beverage. The beverage is stored at room temperature for 16 weeks, and remains clear and without any solid precipitate, sediment, crystal, floc, cloud, or haze.

### Example 5

A cola-flavored syrup and beverage are made essentially in accordance with the method used in Example 4, except that potassium sorbate first is blended with cola flavor containing tocopherol and then is added to the syrup at any time during the process.

Syrup thus prepared is a dark syrup for a refreshing cola-tasting beverage. The syrup is stored at room temperature for 7 days. The syrup is without any solid precipitate, sediment, crystal, floc, cloud, or haze throughout the storage period.

An aliquot of syrup thus prepared is diluted with 5 aliquots of throw water ("1+5 throw") to produce refreshing cola-flavored beverage. The beverage is stored at room temperature for 16 weeks, and is without any solid precipitate, sediment, crystal, floc, cloud, or haze throughout the storage period.

### Example 6

Lemon lime flavored syrup, and beverages made therefrom using 1+5 throw, are made. A bulk quantity of water at a temperature between about 10°C and 93.33°C (50°F and 200°F) is charged to a stirred tank and agitation is started.

Ingredients such as buffers, sweeteners, anti-foam agents, and nutrients are added to the bulk quantity of water. The ingredients are added as solid, liquid, solution, emulsion, or in any form. Acids then are added to the bulk solution with continuing agitation.

Potassium sorbate and Polysorbate 20 are dissolved in water. The quantity of sorbate added is sufficient to provide a sorbate concentration of 0.12 weight percent in the syrup. This solution is added to the bulk solution with continuing agitation.

The temperature of the bulk solution is lowered to less than about 48.88°C (about 120°F), if necessary,
and lemon lime flavor is added with continuing agitation. After thorough blending, additional top-off water required to achieve the desired volume is added and agitation continues until the syrup is thoroughly mixed. The syrup then is cooled to ambient temperature, if necessary.

Syrup thus prepared is a clear syrup for a fresh-tasting beverage. The syrup is stored at room temperature for 7 days. The syrup remains clear and without any solid precipitate, sediment, crystal, floc, cloud, or haze.

An aliquot of syrup thus prepared is diluted with 5 aliquots of throw water ("1+5 throw") to produce fresh-tasting lemon lime flavored clear beverage. The beverage is stored at room temperature for 16 weeks, and remains clear and without any solid precipitate, sediment, crystal, floc, cloud, or haze.

### Example 7

Lemon lime flavored syrup, and beverages made therefrom using 1+5 throw, are made in accordance with the method of Example 6, except that the solution containing potassium sorbate and Polysorbate 20 was added to the bulk quantity of water before the other ingredients are added.

Syrup thus prepared is a clear syrup for a fresh-tasting beverage. The syrup is stored at room temperature for 7 days. The syrup remains clear and without any solid precipitate, sediment, crystal, floc, cloud, or haze.

An aliquot of syrup thus prepared is diluted with 5 aliquots of throw water ("1+5 throw") to produce fresh-tasting lemon lime flavored clear beverage. The beverage is stored at room temperature for 16 weeks, and remains clear and without any solid precipitate, sediment, crystal, floc, cloud, or haze.

### Example 8

Lemon lime flavored syrup, and beverages made therefrom using 1+5 throw, are made in accordance with the method of Example 6, except that buffers are added to the solution containing potassium sorbate and Polysorbate 20.

Syrup thus prepared is a clear syrup for a fresh-tasting beverage. The syrup is stored at room temperature for 7 days. The syrup remains clear and without any solid precipitate, sediment, crystal, floc, cloud, or haze.

An aliquot of syrup thus prepared is diluted with 5 aliquots of throw water ("1+5 throw") to produce fresh-tasting lemon lime flavored clear beverage. The beverage is stored at room temperature for 16 weeks, and remains clear and without any solid precipitate, sediment, crystal, floc, cloud, or haze.

While the invention has been described with respect to specific examples including presently preferred modes of carrying out the invention, those skilled in the art will appreciate that there are numerous variations and permutations of the above described systems and techniques that fall within the and scope of the invention as set forth in the appended claims. For example, other clear beverages are made in embodiments of the invention, and other non-aqueous solvents are used in embodiments of the invention.

## Claims

1. A method for reducing sorbic acid precipitation during manufacture and storage of stable preserved syrup, said method comprising
(a) forming a microemulsion comprising sorbic acid, a non-aqueous solvent, and surfactant,
(b) combining syrup ingredients in a bulk quantity of liquid, and
(c) adding the microemulsion to the liquid.

2. The method of claim 1, wherein the surfactant is selected from the group consisting of the polysorbates and blends thereof.

3. The method of any of claims 1-2, wherein the concentration of polysorbate in the syrup is between 0.5 ppm and 200 ppm.

4. The method of any of claims 1-3, wherein the non-aqueous solvent is selected from the group consisting of propylene glycol, ethanol, citric acid, benzylalcohol, triacetin, limonene, vegetable oils, medium chain triglycerides, citrus flavor oil, and blends thereof.

5. The method of any of claims 1-4, wherein the microemulsion further comprises a co-solvent miscible with water and the non-aqueous solvent.

6. The method of claim 5, wherein the co-solvent is selected from the group consisting of propylene glycol and ethanol in 60:40 combination, ethanol and citric acid in 90:10 combination, and blends thereof.

7. A method for reducing sorbic acid precipitation during manufacture and storage of stable preserved syrup, said method comprising:
(a) dissolving a sorbic acid compound in an oil based ingredient of the syrup, to form a sorbic acid compound-containing oil-based ingredient, wherein the oil based ingredient of the syrup is selected from the group consisting of oil-based nutrients, oil-based flavors and flavor compounds, oil based anti-oxidants, and blends thereof,
(b) separately combining syrup ingredients in a bulk quantity of liquid, and
(c) adding the sorbic acid compound-containing oil-based ingredient formed in step (a) to the liquid from step (b) to form the stable preserved syrup.

8. The method of claim 7 wherein the oil-based ingredient is selected from the group consisting of tocopherols, tocotrienols, citrus flavors, TBHQ, BHT, BHA, and blends thereof.

9. The method of any of claims 7 or 8, wherein the sorbic acid compound is selected from the group consisting of alkali metal sorbates and blends thereof.

10. The method of any of claims 7-9, wherein the sorbic acid compound is potassium sorbate.

11. A method for reducing sorbic acid precipitation during manufacture and storage of stable preserved syrup, said method comprising
(a) dissolving a sorbic acid compound and polysorbate in fluid,
(b) combining syrup ingredients in a bulk quantity of liquid, and
(c) adding the sorbic acid compound-containing solution to the liquid.

12. The method of claim 11, wherein the concentration of polysorbate in the syrup is between one of the following:
• 0.5 ppm and 200 ppm.
• 1 ppm and 150 ppm.
• 5 ppm and 100 ppm.

13. The method of any of claims 7-8 and 11-12, wherein the sorbic acid compound is selected from the group consisting of compounds and compositions that contain sorbic acid or are converted to or liberate sorbic acid under conditions found during syrup and beverage manufacture, and blends thereof, or,
wherein the sorbic acid compound is selected from the group consisting of sorbic acid, alkali metal salts of sorbic acid, and blends thereof.

14. The method of any of the preceding claims wherein the concentration of sorbic acid in the syrup is less than 1300 ppm.

15. A method for reducing sorbic acid precipitation during manufacture and storage of a stable preserved beverage prepared by diluting stable preserved syrup, said method comprising the steps of any of claims 1-14 and further comprising
(d) mixing the stable preserved syrup with fluid in a quantity sufficient to make the stable preserved beverage, preferably wherein the concentration of sorbic acid in the beverage is less than 500 ppm.

## Patentansprüche

1. Verfahren zum Verringern des Ausfällens von Sorbinsäure während der Herstellung und Lagerung von stabilem konservierten Sirup, wobei das Verfahren umfasst:
a) Bilden einer Sorbinsäure, ein nichtwässriges Lösungsmittel und Benetzungsmittel umfassenden Mikroemulsion,
b) Kombinieren der Sirupbestandteile in einer großen Menge Flüssigkeit und
c) Hinzufügen der Mikroemulsion zu der Flüssigkeit.

2. Verfahren nach Anspruch 1, wobei das Benetzungsmittel aus der aus Polysorbaten und Mischungen daraus bestehenden Gruppe ausgewählt wird.

3. Verfahren nach einem der Ansprüche 1 bis 2, wobei die Konzentration von Polysorbat in dem Sirup zwischen 0,5ppm und 200ppm beträgt.

4. Verfahren nach einem der Ansprüche 1 bis 3, wobei das nichtwässrige Lösungsmittel aus der aus Propylenglycol, Ethanol, Zitronensäure, Benzylalkohol, Triacetin, Limonen, Pflanzenöl, einer mittleren Kette von Triglyceriden, Citrusaromaöl und Mischungen daraus bestehenden Gruppe ausgewählt wird.

5. Verfahren nach einem der Ansprüche 1 bis 4, wobei die Mikroemulsion ferner ein mit Wasser und dem nichtwässrigen Lösungsmittel mischbares Co-Lösungsmittel umfasst.

6. Verfahren nach Anspruch 5, wobei das Co-Lösungsmittel aus der aus Propylenglycol und Ethanol in einer 60:40-Kombination, Ethanol und Zitronensäure in einer 90:10-Kombination und Mischungen daraus bestehenden Gruppe ausgewählt wird.

7. Verfahren zum Verringern des Ausfällens von Sorbinsäure während der Herstellung und Lagerung von stabilem konservierten Sirup, wobei das Verfahren umfasst:
a) Auflösen einer Sorbinsäureverbindung in einem ölbasierten Bestandteil des Sirups, um eine den ölbasierten Bestandteil enthaltende Sorbinsäureverbindung zu bilden, wobei der ölbasierte Bestandteil des Sirups aus der aus ölbasierten Nährstoffen, ölbasierten Aromen und Aromaverbindungen, ölbasierten Antioxydantien und Mischungen daraus bestehenden Gruppe ausgewählt wird,
b) separates Kombinieren der Sirupbestandteile in einer großen Menge Flüssigkeit und
c) Hinzufügen der beim Schritt a) gebildeten, den ölbasierten Bestandteil enthaltenden Sorbinsäureverbindung zu der Flüssigkeit vom Schritt b), um den stabilen konservierten Sirup zu bilden.

8. Verfahren nach Anspruch 7, wobei der ölbasierte Bestandteil aus der aus Tocopherolen, Tocotrienolen, Citrusaromen, TBHQ, BHT, BHA und Mischungen daraus bestehenden Gruppe ausgewählt wird.

9. Verfahren nach Anspruch 7 oder 8, wobei die Sorbinsäureverbindung aus der aus Alkalimetallsorbaten und Mischungen daraus bestehenden Gruppe ausgewählt wird.

10. Verfahren nach einem der Ansprüche 7 bis 9, wobei die Sorbinsäureverbindung Kaliumsorbat ist.

11. Verfahren zum Verringern des Ausfällens von Sorbinsäure während der Herstellung und Lagerung von stabilem konservierten Sirup, wobei das Verfahren umfasst:
a) Auflösen einer Sorbinsäureverbindung und von Polysorbat in einem Fluid,
b) Kombinieren der Sirupbestandteile in einer großen Menge Flüssigkeit und
c) Hinzufügen der die Sorbinsäureverbindung enthaltenden Lösung zu der Flüssigkeit.

12. Verfahren nach Anspruch 11, wobei die Konzentration von Polysorbat in dem Sirup zwischen einem der folgenden Bereiche liegt:
• 0,5ppm und 200ppm,
• 1ppm und 150ppm,
• 5ppm und 100ppm.

13. Verfahren nach einem der Ansprüche 7 bis 8 und 11 bis 12, wobei die Sorbinsäureverbindung aus der Gruppe ausgewählt wird, die aus Verbindungen und Gemischen, welche Sorbinsäure enthalten oder unter Bedingungen, die während der Sirup- und Getränkeherstellung angetroffen werden, in Sorbinsäure umgewandelt werden oder Sorbinsäure abscheiden, und Mischungen daraus besteht, oder
wobei die Sorbinsäureverbindung aus der Gruppe ausgewählt wird, die aus Sorbinsäure, Alkalimetallsalzen der Sorbinsäure und Mischungen daraus besteht.

14. Verfahren nach einem der vorhergehenden Ansprüche, wobei die Konzentration von Sorbinsäure in dem Sirup kleiner ist als 1300ppm.

15. Verfahren zum Verringern des Ausfällens von Sorbinsäure während der Herstellung und Lagerung eines stabilen konservierten Getränks, welches durch Verdünnen von stabilem konservierten Sirup hergestellt wird,
wobei das Verfahren die Schritte nach einem der Ansprüche 1 bis 14 umfasst und ferner umfasst
d) Mischen des stabilen konservierten Sirups mit einem Fluid in einer Menge, die ausreicht, um das stabile konservierte Getränk zu bilden, wobei vorzugsweise die Konzentration der Sorbinsäure in dem Getränk kleiner ist als 500ppm.

## Revendications

1. Procédé de réduction de la précipitation d'acide sorbique pendant la fabrication et la conservation de sirop conservé stable, ledit procédé comprenant
(a) la formation d'une microémulsion comprenant de l'acide sorbique, un solvant non aqueux, et un tensioactif,
(b) la combinaison d'ingrédients de sirop dans une quantité importante de liquide, et
(c) l'ajout de la microémulsion au liquide.

2. Procédé de la revendication 1, dans lequel le tensioactif est choisi dans le groupe constitué des polysorbates et des mélanges de ceux-ci.

3. Procédé de l'une quelconque des revendications 1 à 2, dans lequel la concentration de polysorbate dans le sirop est comprise entre 0,5 ppm et 200 ppm.

4. Procédé de l'une quelconque des revendications 1 à 3, dans lequel le solvant non aqueux est choisi dans le groupe constitué des propylène glycol, éthanol, acide citrique, alcool benzylique, triacétine, limonène, huiles végétales, triglycérides à chaîne moyenne, huile d'agrume, et des mélanges de ceux-ci.

5. Procédé de l'une quelconque des revendications 1 à 4, dans lequel la microémulsion comprend en outre un cosolvant miscible dans l'eau et le solvant non aqueux.

6. Procédé de la revendication 5, dans lequel le cosolvant est choisi dans le groupe constitué du propylène glycol et de l'éthanol en combinaison 60:40, de l'éthanol et de l'acide citrique en combinaison 90:10, et des mélanges de ceux-ci.

7. Procédé de réduction de la précipitation d'acide sorbique pendant la fabrication et la conservation de sirop conservé stable, ledit procédé comprenant :
(a) la dissolution d'un composé d'acide sorbique dans un ingrédient à base d'huile du sirop, pour former un ingrédient à base d'huile contenant un composé d'acide sorbique, où l'ingrédient à base d'huile du sirop est choisi dans le groupe constitué de nutriments à base d'huile, arômes à base d'huile et composés d'arôme, antioxydants à base d'huile, et des mélanges de ceux-ci,
(b) la combinaison séparément des ingrédients du sirop dans une quantité importante de liquide, et
(c) l'ajout de l'ingrédient à base d'huile contenant un composé d'acide sorbique formé dans l'étape (a) au liquide de l'étape (b) pour former le sirop conservé stable.

8. Procédé de la revendication 7 dans lequel l'ingrédient à base d'huile est choisi dans le groupe constitué de tocophérols, tocotriénols, arômes d'agrume, TBHQ, BHT, BHA, et des mélanges de ceux-ci.

9. Procédé de l'une quelconque des revendications 7 ou 8, dans lequel le composé d'acide sorbique est choisi dans le groupe constitué de sorbates de métal alcalin et des mélanges de ceux-ci.

10. Procédé de l'une quelconque des revendications 7 à 9, dans lequel le composé d'acide sorbique est le sorbate de potassium.

11. Procédé de réduction de la précipitation d'acide sorbique pendant la fabrication et la conservation de sirop conservé stable, ledit procédé comprenant
(a) la dissolution d'un composé d'acide sorbique et de polysorbate dans un fluide,
(b) la combinaison des ingrédients de sirop dans une quantité importante de liquide, et
(c) l'ajout de la solution contenant un composé d'acide sorbique au liquide.

12. Procédé de la revendication 11, dans lequel la concentration de polysorbate dans le sirop est dans une des plages suivantes :
• entre 0,5 ppm et 200 ppm,
• entre 1 ppm et 150 ppm,
• entre 5 ppm et 100 ppm.

13. Procédé de l'une quelconque des revendications 7 à 8 et 11 à 12, dans lequel le composé d'acide sorbique est choisi dans le groupe constitué de composés et compositions qui contiennent de l'acide sorbique ou sont transformés en ou libèrent de l'acide sorbique dans des conditions présentes pendant la fabrication de sirop et de boisson, et des mélanges de ceux-ci, ou,
dans lequel le composé d'acide sorbique est choisi dans le groupe constitué de l'acide sorbique, de sels de métal alcalin d'acide sorbique, et des mélanges de ceux-ci.

14. Procédé de l'une quelconque des revendications précédentes dans lequel la concentration d'acide sorbique dans le sirop est inférieure à 1300 ppm.

15. Procédé de réduction de la précipitation d'acide sorbique pendant la fabrication et la conservation d'une boisson conservée stable préparée par dilution de sirop conservé stable, ledit procédé comprenant les étapes de l'une quelconque des revendications 1 à 14 et comprenant en outre
(d) le mélange du sirop conservé stable avec un fluide en une quantité suffisante pour fabriquer la boisson conservée stable, de préférence dans lequel la concentration d'acide sorbique dans la boisson est inférieure à 500 ppm.
